(19) **Europäisches Patentamt**

**European Patent Office**

**Office européen des brevets**

(11) **EP 1 405 568 B1**

(12) **EUROPEAN PATENT SPECIFICATION**

(45) Date of publication and mention
of the grant of the patent:
**11.10.2006 Bulletin 2006/41**

(51) Int Cl.:
**A23G 9/34** (2006.01)

(21) Application number: **03028084.6**

(22) Date of filing: **05.12.2002**

(54) **Frozen aerated confection**

Gefrorene belüftete Süssspeisen

Confiserie congelée aerée

(84) Designated Contracting States:
**AT BE BG CH CY CZ DE DK EE ES FI FR GB GR
IE IT LI LU MC NL PT SE SI SK TR**

(30) Priority: **21.12.2001 EP 01310838**

(43) Date of publication of application:
**07.04.2004 Bulletin 2004/15**

(62) Document number(s) of the earlier application(s) in
accordance with Art. 76 EPC:
**02258414.8 / 1 321 043**

(73) Proprietors:
• **UNILEVER PLC**
**London EC4P 4BQ (GB)**
Designated Contracting States:
**CY GB IE**
• **UNILEVER N.V.**
**3013 AL Rotterdam (NL)**
Designated Contracting States:
**AT BE BG CH CZ DE DK EE ES FI FR GR IT LI LU
MC NL PT SE SI SK TR**

(72) Inventors:
• **Malone, Mark Emmett**
**Bedford MK44 1LQ (GB)**
• **Underdown, Jeffrey**
**Bedford MK44 1LQ (GB)**
• **Wix, Loyd**
**Bedford MK44 1LQ (GB)**

(74) Representative: **Hugot, Alain et al**
**Unilever Patent Group**
**Colworth House**
**Sharnbrook**
**Bedford, MK44 1LQ (GB)**

(56) References cited:
**EP-A- 0 941 668** **FR-A- 2 745 153**
**GB-A- 1 519 294** **GB-A- 2 019 187**
**US-A- 4 145 454** **US-A- 4 244 977**
**US-A- 4 346 120** **US-A- 4 376 791**
**US-B1- 6 187 365**

**Description**

**Field of the invention**

The present invention relates to a frozen aerated confection which is soft at -18°C and which contains less than 0.5 % (w/w) glycerol.

**Background of the invention**

Trying to produce soft ice creams at -18°C has been the subject of many attempts which are all linked to the use of freezing point depressant compounds which make the product 'softer' by reducing the ice content of the product. GB 2019187 describes various 'soft' ice creams containing sugars and sugar alcohols having a molecular weight of less than 600. More particularly it describes a frozen aerated product, with an overrun of at least 140%, containing glycerol in an amount of 1 to 5%, sorbitol, fructose and invert sugar. GB 2019187 also indicates that as long as those low molecular weight sugars are present in the required quantities, the presence of higher molecular weight sugars has no impact on the 'softness' of the end product.

In general, these soft compositions present major drawbacks. First of all, owing to the sugars which are used, these products are extremely sweet and require the use of additives to suppress sweetness and/or, the use of very high overrun, and/or the use of significant amounts of glycerol which does not significantly contribute to the sweet taste but which generates a very noticeable off taste which consumers do not like.

Secondly, in order to try and quantify the softness of the ice cream, GB2019187 uses an Instron test, but it is submitted that this test does not really reproduce the mechanisms which take place in the mouth of a consumer having such an ice cream. It is particularly presented that compositions according to GB2019187 containing high molecular weight sugars are not satisfactory in terms of softness, nevertheless, when tested on Instron according to GB 2019187 they are fully within the teaching of GB 2019187. Therefore, GB 2019187 does not appear to fully resolve the single problem of producing a soft ice cream at typical freezer temperatures eg -18°C or below.

US4346120 describes a high overrun (160% to 200%) frozen aerated dessert containing 10.8% sorbitol.

US4244977 describes a high fructose frozen dessert containing quinine salts as sweetener depressant.

Therefore, the past attempts to produce ice creams to be consumed at typical freezer temperatures eg -18°C and having a normal overrun while not containing noticeable amounts of glycerol and not exhibiting a sweet taste while having organoleptic characteristics similar to soft ice creams which are typically consumed at temperatures of -8°C or warmer have not been successful.

There is thus a need for frozen aerated confections which will satisfy these criteria.

It has now be found that at a given ice content, it is possible to make the product softer by carefully selecting the sugars and particularly by avoiding high molecular weight sugars even in small quantities. It has also been found that, by carefully selecting the sugars, it is possible to make a remarkably soft product without having to use noticeable amounts of glycerol and without having to use additives to suppress sweetness. It has also been found that, with these new formulations, high overruns, in order to mask the sweetness, are no longer necessary.

**Tests and definitions**

**Average molecular weight**

For the purposes of this patent, the average molecular weight for a mixture of freezing point depressants (fdps) is defined by the number average molecular weight $<M>_n$ shown in the equation below. Where $w_i$ is the mass of species i, $M_i$ is the molar mass of species i and $N_i$ is the number of moles of species i of molar mass $M_i$.

$$<M>_n = \frac{\sum w_i}{\sum \left( {w_i}/{M_i} \right)} = \frac{\sum N_i M_i}{\sum N_i}$$

**Freezing point depressants**

Freezing point depressants (fpds) as defined in this invention consist of:

- monosaccharides and disaccharides
- Oligosaccharides containing from 3 to ten monosaccharide units joined in glycosidic linkage.
- Corn syrups with a dextrose equivalent (DE) of greater than 20 preferably > 40 and more preferably > 60. Corn syrups are complex multi-component sugar mixtures and the dextrose equivalent is a common industrial means of classification. Since they are complex mixtures their number average molecular weight $<M>_n$ can be calculated from the equation below. (Journal of Food Engineering, 33 (1997) 221-226)

$$DE = \frac{18016}{<M>_n}$$

- erythritol arabitol, xylitol, sorbitol, mannitol, lactitol and maltitol.

**Definition of overrun.**

Overrun is defined by the following equation

$$OR = \frac{volume..of.ice.cream - volume..of..premix..at..ambient..temp}{volume..of..premix..at..ambient..temp} \times 100$$

**Brief description of the invention**

It is the object of the present invention to provide a frozen aerated confection having an overrun of above 80% and below 150%, preferably above 100%, containing;

- less than 5% w/w fructose
- freezing point depressants in an amount above 25 % w/w and under 37 % w/w, preferably above 26% w/w, more preferably above 27% w/w , and
- between 0 and 15% w/w fat

wherein the freezing point depressants have a number average molecular weight $<M>_n$ of less than250 and wherein the freezing point depressants are constituted at a level of at least 98% (w/w) of mono, di and oligosaccharides.

Preferably, the frozen aerated confection according to the invention contains at least 2% w/w fat.

Preferably the frozen aerated confection according to the invention contains less than 12% w/w fat, more preferably between 4 and 10% w/w.

Preferably the freezing point depressants have a number average molecular weight $<M>_n$ below 230.

Preferably, since fructose delivers a very sweet taste, the frozen aerated confection contains less than 2.5% w/w fructose.

Preferably also the frozen aerated confection according to the invention contains less than 0.5% (w/w) glycerol, more preferably less than 0.25% (w/w) even more preferably less than 0.1% (w/w). Preferably also, the frozen aerated confection according to the invention contains less than 10% w/w sorbitol, more preferably less than 5% w/w sorbitol.

Preferably also, the frozen aerated confection according to the invention contains more than 2% and less than 8% w/w proteins, preferably less than 6% w/w since it has been found that too high a protein content leads to a chalky, cheesy texture which should be avoided.

In a preferred embodiment of the invention the frozen aerated product has an overrun of less than 140%.

**Detailed description of the invention**

The present invention will be further described in the following examples wherein, unless indicated otherwise, the percentages are in weight by weight (w/w).

It should be noted that in the examples below the SMP (skimmed milk powder) is comprised of 50% (w/w) lactose and this needs to taken into account when calculating the total amount of freezing point depressants and the number average molecular weight $<M>_n$. Similarly, ingredients such as cocoa powder, whey concentrate, chocolate, fruit puree or juice, malt extracts also contain freezing point depressants that contribute to $<M>_n$.

Various ice creams were formulated and produced as follows and according to the following processing conditions:

Mixing - all ingredients are combined in an agitated heated mix tank. Once all ingredients have been blended together, the mixture is subjected to high shear mixing at a temperature of at least 65°C for 2 minutes in order to hydrate the stabilisers. Excessive temperature should however be avoided to prevent damage to heat labile components and the formation of cooked off flavours.

Homogenisation - the mix is then subjected to a homogenisation stage to reduce the bulk of the fat droplets to below 1$\mu$m. This is accomplished by homogenising the mixture using a valve homogeniser operating at a pressure of 150bar at a typical temperature of 70°C.

Pasteurisation - to conform to public health requirements the mix is subjected to pasteurisation treatment. The mix is heated to a temperature of 83°C and held for 20 seconds to achieve satisfactory treatment. The pasteurised mix is then rapidly cooled to chill temperatures, typically 4°C.

Ageing - The mix is held at chill temperature, typically 4°C.

The formulations of examples 7 to 12 were frozen using typical ice cream continuous freezers known at votators or scraped surface heat exchangers. These devices serve to freeze the mix and incorporate sufficient air to deliver the desired overrun. Although such devices usually deliver frozen ice cream at temperatures of -5°C to -7°C, the high levels of freezing point depressors in the formulations within this invention mean that the ice creams are typically frozen down to temperatures of -10 to -13°C.

Following freezing in a votator the ice cream is subjected to hardening process that reduces the temperature of the ice cream close to the final storage temperature.

Formulations of examples 1 to 6 were transferred from the votator to a cold extrusion device such as a single screw extruder where the ice cream can be further cooled under shear. Due to high levels of freezing point depressors the ice cream formulations disclosed in this invention will leave the cold extrusion device at temperatures of -20°C or lower.

| Example | 1 | 2 | 3 | 4 | 5 | 6 |
|---|---|---|---|---|---|---|
| | % (w/w) | % (w/w) | % (w/w) | % (w/w) | % (w/w) | % (w/w) |
| SMP (Skimmed Milk Powder) | 10 | 10 | 10 | 10 | 10 | 10 |
| Butterfat | 10 | 10 | 5 | 5 | 10 | 5 |
| MGP (mono glyceryl palmitate) | 0.3 | 0.3 | 0.3 | 0.3 | 0.3 | 0.3 |
| LBG (locust bean gum) | 0.2 | 0.2 | 0.2 | 0.2 | 0.2 | 0.2 |
| Dextrose | 15.2 | 15.2 | 17.3 | 15.3 | 21.7 | 17.3 |
| Sucrose | 7.6 | | 8.65 | 7.65 | | |
| Corn syrup DE=63 83%solids | | 9.7 | | | 5 | 11 |
| Water | 56.6859 | 54.5859 | 58.5359 | 61.5359 | 52.7859 | 56.1859 |
| Flavour | 0.0141 | 0.0141 | 0.0141 | 0.0141 | 0.0141 | 0.0141 |
| Average molecular weight | 229 | 219 | 227 | 229 | 206 | 220 |
| Overrun | 135% | 135% | 135% | 135% | 135% | 135% |

| Example | 7 | 8 | 9 | 10 |
|---|---|---|---|---|
| | % (w/w) | % (w/w) | % (w/w) | % (w/w) |
| Butter fat | 4 | 4 | 4 | 10 |
| SMP | 8 | 8 | 8 | 10 |
| MGP | 0.15 | 0.15 | 0.15 | 0.3 |
| Iota Carrageenan | 0.2 | 0.2 | 0.2 | |
| Vanilla | | | | 0.0141 |
| Vanillin | 0.01 | 0.01 | 0.01 | 0.01 |
| Sucrose | 6.5 | 8.125 | 5.0 | 17.8 |
| Lactose | 3.5 | 4.375 | | |
| Dextrose | 15.4 | 19.715 | 19.375 | 8.9 |
| Water | 62.04 | 55.22 | 63.065 | 52.79 |
| LBG | 0.2 | 0.2 | 0.2 | 0.2 |
| Average Molecular weight | 233 | 230 | 212 | 273 |
| Overrun | 100% | 100% | 135% | 135% |

| Example | 11 |
|---|---|
| | % (w/w) |
| Coconut oil | 7.0 |
| Chocolate | 2.0 |
| SMP | 3.74 |
| Cocoa powder | 7.0 |
| Whey Conc. powder | 3.84 |
| Lactose | 4.4 |
| Dextrose | 23.0 |
| Sucrose | 3.0 |
| LBG | 0.3 |
| MGP | 0.2 |
| Colour | 0.4 |
| Water | 45.12 |
| Average Molecular weight | 216 |
| Overrun | 200% |

| Example | 12 | 13 | 14 |
|---|---|---|---|
| | % (w/w) | % (w/w) | % (w/w) |
| Butter fat | 4 | 4 | 4 |
| SMP | 8 | 8 | 8 |
| MGP | 0.15 | 0.15 | 0.15 |
| Iota Carrageenan | 0.2 | 0.2 | 0.2 |
| Vanillin | 0.01 | 0.01 | 0.01 |
| Sucrose | 15.5 | 11.5 | 19.27 |
| Corn Syrup DE40 | 14 | 10.35 | 17.4 |
| Water | 57.94 | 65.6 | 50.77 |
| LBG | 0.2 | 0.2 | 0.2 |
| Average Molecular weight | 380 | 379 | 381 |
| Overrun | 100% | 100% | 100% |

Examples 1-11 were considered to be soft and comparable to artisanal soft serve ice creams whereas comparative examples 12-14 were perceived to be much firmer.

**Claims**

1. Frozen aerated confection having an overrun of above 80% and below 150%, containing;

. less than 5% w/w fructose
. freezing point depressants in an amount above 25 % w/w and below 37 % w/w, and
. between 0 and 15% fat,

wherein the freezing point depressants have a number average molecular weight $<M>_n$ of less than 250 and wherein the freezing point depressants are constituted at a level of at least 98% (w/w) of monosaccharides, disaccharides and oligosaccharides containing from three to ten monosaccharide units joined in glycosidic linkage.

2. Frozen aerated confection according to claim 1 containing between 2% and 12% fat.

3. Frozen aerated confection according to claim 1 or 2 wherein the freezing point depressants have a number average molecular weight $<M>_n$ below 230.

4. Frozen aerated confection according to claim 3 containing less than 2.5 % w/w fructose.

5. Frozen aerated confection according to claim 1 containing less than 0.5% (w/w)glycerol, preferably less than 0.25% (w/) even more preferably less than 0.1% (w/w).

6. Frozen aerated confection according to claims 1 to 6 containing more than 2% and less than 8% proteins.

7. Frozen aerated product according to claims 1 to 6 having an overrun of less than 140%.


**Patentansprüche**

1. Gefrorenes, belüftetes Konfekt mit einem Überlauf von über 80% und unter 150%, enthaltend:

   - weniger als 5% Gew./Gew. Fructose
   - Gefrierpunktserniedrigungsmittel in einer Menge über 25% Gew./Gew. und unter 37% Gew./Gew. und
   - zwischen 0 und 15% Fett,

   worin die Gefrierpunktserniedrigungsmittel ein Molekulargewicht-Zahlenmittel $<M>_n$ von weniger als 250 haben und worin die Gefrierpunktserniedrigungsmittel bei einem Grad von mindestens 98% (Gew./Gew.) aus Monosacchariden, Disacchariden und Oligosacchariden gebildet sind, welche von drei bis zehn Monosaccharid-Einheiten, verbunden in glycosidischer Bindung, enthalten.

2. Gefrorenes, belüftetes Konfekt gemäß Anspruch 1, enthaltend zwischen 2% und 12% Fett.

3. Gefrorenes, belüftetes Konfekt gemäß Anspruch 1 oder 2, worin die Gefrierpunkterniedrigungsmittel ein Molekulargewichtzahlenmittel $<M>_n$ unter 230 haben.

4. Gefrorenes, belüftetes Konfekt gemäß Anspruch 3, enthaltend weniger als 2,5% Gew./Gew. Fructose.

5. Gefrorenes, belüftetes Konfekt gemäß Anspruch 1, enthaltend weniger als 0,5% (Gew./Gew.) Glycerol, vorzugsweise weniger als 0,25% (Gew./), noch bevorzugter weniger als 0,1% (Gew./Gew.).

6. Gefrorenes, belüftetes Konfekt gemäß Ansprüchen 1 bis 6, enthaltend mehr als 2% und weniger als 8% Proteine.

7. Gefrorenes, belüftetes Produkt gemäß Ansprüchen 1 bis 6 mit einem Überlauf von weniger als 140%.


**Revendications**

1. Confiserie aérée congelée ayant un foisonnement supérieur à 80 % et inférieur à 150 %, contenant :

   - moins de 5 % en p/p de fructose,
   - des dépresseurs du point de congélation dans une quantité supérieure à 25 % en p/p et inférieure à 37 % en p/p, et
   - entre 0 et 15 % de graisse,

   dans laquelle les dépresseurs du point de congélation ont un nombre moyen de masse moléculaire $<M>_n$ inférieure à 250 et dans laquelle les dépresseurs du point de congélation sont constitués, à un niveau d'au moins 98 % (p/p) de monosaccharides, disaccharides et oligosaccharides contenant de trois à dix unités de monosaccharide jointes en une liaison glycosidique.

2. Confiserie aérée congelée selon la revendication 1, contenant entre 2 % et 12 % de graisse.

3. Confiserie aérée congelée selon la revendication 1 ou 2, dans laquelle les dépresseurs du point de congélation ont un nombre moyen de masse moléculaire moyen $<M>_n$ inférieur à 230.

4. Confiserie aérée congelée selon la revendication 3, contenant moins de 2,5 % en p/p de fructose.

5. Confiserie aérée congelée selon la revendication 1, contenant moins de 0,5 % (p/p) de glycérol, de préférence moins de 0,25 % (p/p) et encore plus préférentiellement moins de 0,1 % (p/p).

6. Confiserie aérée congelée selon les revendications 1 à 6, contenant plus de 2 % et moins de 8 % de protéines.

7. Produit aéré congelé selon les revendications 1 à 6 ayant un foisonnement inférieur à 140 %.